# EUROPÄISCHE PATENTSCHRIFT

(11) **EP 1 126 573 B1**
(45) Veröffentlichungstag und Bekanntmachung des Hinweises auf die Patenterteilung: **04.08.2010**
(21) Anmeldenummer: 01102576.4
(22) Anmeldetag: 06.02.2001
(51) Int. Cl.: H02J 3/01, H02H 9/00

(54) **Bedämpfungseinrichtung für wenigstens ein elektrisches Kabel**
Damping device for at least one electrical cable
Dispositif atténuateur pour au moins un câble électrique

(30) Priorität: 15.02.2000 DE 10006627
(43) Veröffentlichungstag der Anmeldung: 22.08.2001
(73) Patentinhaber: SIEMENS AKTIENGESELLSCHAFT, 80333 München (DE)
(72) Erfinder: Brockmeyer, Ansgar, Dr., 91058 Tennenlohe (DE); Eickhoff, Dirk, 91054 Erlangen (DE); Hemmer, Bernhard, 96110 Schesslitz (DE); Reimann, Oliver, 91052 Erlangen (DE); Zimmer, Gerhard, Dr., 91054 Erlangen (DE)

(56) Entgegenhaltungen:
- EP-A- 0 829 948
- DE-A- 19 636 816
- HILL R J ET AL: "A FREQUENCY DOMAIN MODEL FOR 3 KV DC TRACTION DC-SIDE RESONANCE IDENTIFICATION" IEEE TRANSACTIONS ON POWER SYSTEMS, IEEE INC. NEW YORK, US, Bd. 10, Nr. 3, 1. August 1995 (1995-08-01), Seiten 1369-1375, XP000558026 ISSN: 0885-8950

## Beschreibung

Die Erfindung betrifft eine Bedämpfungseinrichtung für wenigstens ein elektrisches Kabel.

Elektrische, insbesondere Hochspannungskabel, beeinflussen im Mittelfrequenzbereich durch ihre hohen Kapazitätsbeläge das Resonanzverhalten der über die elektrischen Kabel gekoppelten Systeme. So können z. B. bei Schienenfahrzeugen durch die Hochspannungskabel die von den elektrischen Fahrmotoren und den Traktionsumrichtern in das Fahrleitungsnetz emittierten Störströme (Störströme im Bereich von ca. 2 kHz bis 15 kHz) verstärkt werden. Auch bei stationären taktenden Umrichtern werden durch die Taktung des Umrichters im Versorgungsnetz Resonanzen angeregt.

Bei Schienenfahrzeugen, z. B. beim ICE der ersten und zweiten Generation, werden zur Verringerung der Störströme Netzfilter eingesetzt. Derartige Netzfilter sind teuer, weisen eine große Masse auf (beim ICE 1 ca. 900 kg je Triebkopf) und benotlgen relativ viel Einbauraum.

Der Einfluss von derartigen temporär auftretenden Resonanzen wird in der Zeitschrift "ZEV + DET Glas. Ann. 122 (1998) Nr. 7 Juli", Seiten 287 bis 295, in dem Aufsatz "Einfluss von Netzfiltern auf die Ausbreitung von Oberschwingungen an Resonanzstellen im Wechselstrom-Bahnnetz" beschrieben.

Aufgabe der vorliegenden Erfindung ist es, eine Bedämpfungseinrichtung für wenigstens ein elektrisches Kabel zu schaffen, die einen konstruktiv einfachen Aufbau sowie ein geringes Volumen und ein geringes Gewicht aufweist.

Die Aufgabe wird erfindungsgemäß durch eine Bedämpfungseinrichtung gemäß Anspruch 1 gelöst. Vorteilhafte Ausgestaltungen der erfindungsgemäßen Bedämpfungseinrichtung sind jeweils Gegenstand von weiteren Ansprüchen.

Die erfindungsgemäße Bedämpfungseinrichtung für wenigstens ein elektrisches Kabel umfasst wenigstens eine Parallelschaltung aus wenigstens einer Induktivität und wenigstens einem Widerstand sowie wenigstens einer Kapazität, wobei die Parallelschaltung zwischen dem Schirmpotential des elektrischen Kabels und einem dazu unterschiedlichen Bezugspotential angeordnet ist.

Die Bedämpfungseinrichtung gemäß Anspruch 1 ist sowohl für mobile Einrichtungen, wie z. B. Schienenfahrzeuge, als auch stationäre Einrichtungen, wie z. B. Windkraftwerke mit Umrichtern, verwendbar.

Durch die Erfindung wird das vorwiegend kapazitive Verhalten von elektrischen Kabeln, das bei Hochspannungsleitungen besonders stark ausgeprägt ist, in den relevanten bzw. kritischen Frequenzbereichen in ein ohmsches-induktives Verhalten umgewandelt. Dadurch werden Resonanzen der Leitungskapazität mit Induktivitäten anderer Einrichtungen des Systems, beispielsweise Impedanzen der Fahrzeugtransformators und der elektrischen Leitungen sowie des Fahrwegs, des Unterwerks und der Fahrleitung, zuverlässig vermieden.

Die Bedämpfungseinrichtung nach Anspruch 1, die zumindest eine Induktivität, einen dazu parallel geschalteten Widerstand und eine parallel dazu angeordnete Kapazität umfasst, wird zwischen das Schirmpotential des elektrischen Kabels und einem Bezugspotential geschaltet, das einen anderen Wert als das Schirmpotential aufweist.

Die erfindungsgemäße Bedämpfungseinrichtung ist sowohl für die Bedämpfung von Oberschwingungen in Wechselstromsystemen als auch für die Bedämpfung von Oberschwingungen in Gleichstromsystemen geeignet.

Im Rahmen der Erfindung kann der Widerstand entweder als separates Bauteil (Anspruch 2) ausgebildet sein oder der Widerstand wird vom Wicklungswiderstand der Induktivität der Parallelschaltung gebildet (Anspruch 3).

Gemäß einer vorteilhaften Ausgestaltung wird die Kapazität von parasitären Kapazitäten gebildet, die sich zwischen dem Schirmpotential des elektrischen Kabels und dem Bezugspotential ausbilden (Anspruch 4).

Im Rahmen der Erfindung ist es weiterhin möglich, dass das Schirmpotential vom Leitungsschirm wenigstens eines elektrischen Kabels gebildet wird (Anspruch 5).

Abhängig vom Einsatzgebiet kann als Bezugspotential Erdpotential (Anspruch 6), Massepotential (Anspruch 7) oder - bei Schienenfahrzeugen - das Massepotential eines Wagenkastens (Anspruch 8) gewählt werden.

Ein Ausführungsbeispiel der Erfindung ist in der Zeichnung schematisch dargestellt und wird im folgenden näher beschrieben. Es zeigen:
- FIG 1: eine prinzipielle Anordnung einer Ausführungsform der erfindungsgemäßen Bedämpfungseinrichtung in einem Schienenfahrzeug,
- FIG 2: eine Anschlussmöglichkeit der Bedämpfungseinrichtung an ein elektrisches Kabel.

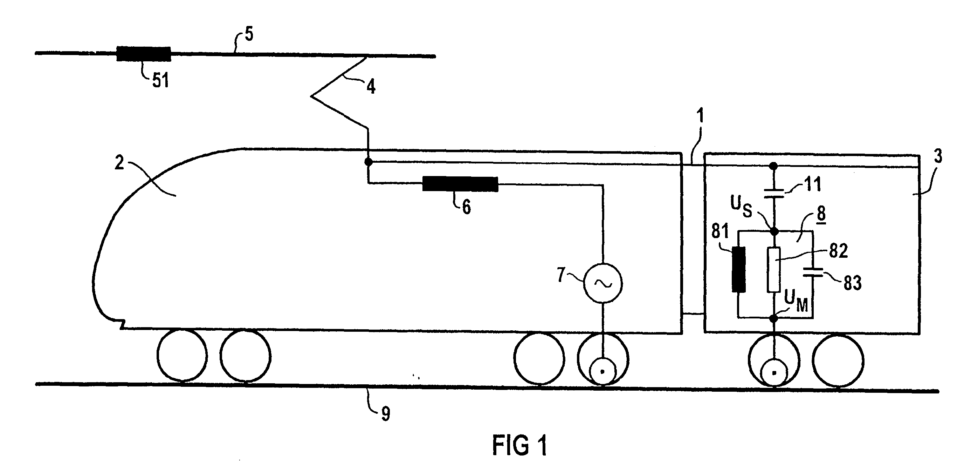

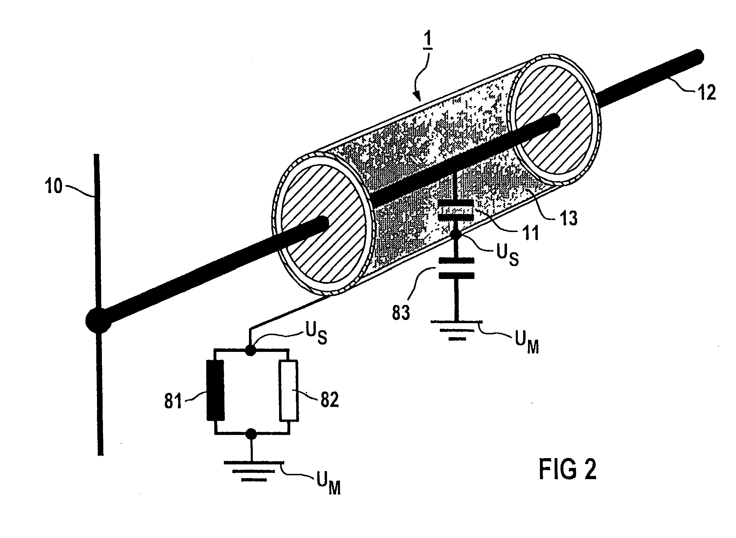

In FIG 1 ist mit 1 ein elektrisches Kabel bezeichnet, das als koaxiale Hochspannungsleitung ausgeführt ist. Die koaxiale Hochspannungsleitung 1, durch die die Wagen 2 und 3 eines Schienenfahrzeuges mit elektrischer Energie versorgt werden, weist eine Leitungskapazität 11 auf, die sich zwischen der Seele 12 und dem Schirm 13 der Hochspannungsleitung 1 ausbildet (siehe FIG 2). Die Hochspannungsleitung 1 wird durch Anlegen eines Stromabnehmers 4 von einer Fahrleitung 5 mit Strom aus einem in der FIG 1 nicht dargestellten Unterwerk versorgt. Fahrleitung 5, Fahrweg (Gleis 9) und Unterwerk besitzen zusammen eine Netzimpedanz 51. Weiterhin werden bei angelegtem Stromabnehmer 4 wenigstens ein Fahrzeugtransformator 6 sowie die nachgeschalteten Traktionsumrichter und die nachgeschalteten Bordnetzumrichter mit elektrischer Energie versorgt. Die Traktionsumrichter und die Bordnetzumrichter werden getaktet (gepulst) betrieben und bilden dadurch eine Störspannungsquelle 7, die tonfrequente Störströme erzeugt. Die tonfrequenten Störströme werden über den Fahrzeugtransformator 6, den Stromabnehmer 4 und der Fahrleitung 5 in das Fahrleitungsnetz emittiert. Die Leitungskapazität 11 verursacht mit Induktivitäten anderer Einrichtungen (z. B. Impedanzen des Fahrzeugtransformators 6, vorgenannte Netzimpedanz 51) Resonanzen. Zur Verringerung der Störströme wurden bisher Netzfilter eingesetzt, die ein hohes Gewicht und ein entsprechend großes Volumen besitzen.

Erfindungsgemäß wird nun vorgeschlagen, eine Bedämpfungseinrichtung 8 vorzusehen, die im dargestellten Ausführungsbeispiel eine Parallelschaltung 8 aus einer Induktivität 81 und einem Widerstand 82 sowie einer Kapazität 83 umfasst. Die Parallelschaltung 8 ist zwischen dem Schirmpotential U_{S} der koaxialen Hochspannungsleitung 1 und dem Massepotential U_{M} des Wagens 3 angeordnet. Das Massepotential UM des Wagens 3 entspricht im vorliegenden Fall dem Potential des Gleises 9.

Der Aufbau der koaxialen Hochspannungsleitung 1 sowie der Anschluss einer Bedämpungseinrichtung an diese Hochspannungsleitung 1 ist in FIG 2 dargestellt.

Die Hochspannungsleitung 1 weist eine Seele 12 auf, die von einem Leitungsschirm 13 umschlossen wird. Der Leitungsschirm 13 wird wiederum von einem in der Zeichnung nicht dargestellten Mantel umschlossen.

Die koaxiale Hochspannungsleitung 1 ist an eine Verbindungsleitung 10 geführt, die den Stromabnehmer 4 mit dem Fahrzeugtransformator 6 verbindet.

Die in FIG 2 dargestellte Bedämpfungseinrichtung umfasst wiederum eine Induktivität 81 sowie einen dazu parallel angeordneten Widerstand 82. Die Induktivität 81 und der Widerstand 82 sind mit ihrem einen gemeinsamen Anschluss an das Schirmpotential U_{S} der Hochspannungsleitung 1 und mit ihrem anderen gemeinsamen Anschluss an das Massepotential U_{M} des Wagens 3 geführt.

Die Bedämpfungseinrichtung umfasst weiterhin wiederum eine Kapazität 83, die parallel zur Induktivität 81 und parallel zum Widerstand 82 angeordnet ist und ebenfalls an das Schirmpotential U_{S} der Hochspannungsleitung 1 und an das Massepotential U_{M} des Wagens 3 geführt ist.

## Patentansprüche

1. Bedämpfungseinrichtung (8) für wenigstens ein geschirmtes elektrisches Kabel, (1, 12, 13), die wenigstens eine Parallelschaltung (8) aus wenigstens einer Induktivität (81) und wenigstens einem Widerstand (82) sowie wenigstens einer Kapazität (83) umfasst, wobei die Parallelschaltung (8) zwischen einem Schirmpotential (U_{S}) des elektrischen Kabels (1, 13) und einem dazu unterschiedlichen Bezugspotential (U_{M}) angeordnet ist.

2. Bedämpfungseinrichtung nach Anspruch 1, wobei der Widerstand (82) als separates Bauteil ausgebildet ist.

3. Bedämpfungseinrichtung nach Anspruch 1, wobei der Widerstand (82) vom Wicklungswiderstand der Induktivität (81) der Parallelschaltung (8) gebildet wird.

4. Bedämpfungseinrichtung nach Anspruch 1, wobei die Kapazität (83) von der parasitären Kapazität gebildet wird, die sich zwischen dem Schirmpotential (U_{S}) des elektrischen Kabels (1) und dem Bezugspotential (U_{M}) ausbildet.

5. Bedämpfungseinrichtung nach Anspruch 1, wobei das Schirmpotential (U_{S}) vom Leitungsschirm (13) wenigstens eines elektrischen Kabels (1) gebildet wird.

6. Bedämpfungseinrichtung nach Anspruch 1, wobei das Bezugspotential vom Erdpotential gebildet wird.

7. Bedämpfungseinrichtung nach Anspruch 1, wobei das Bezugspotential vom Massepotential gebildet wird.

8. Bedämpfungseinrichtung nach Anspruch 1, wobei für Schienenfahrzeuge das Bezugspotential vom Massepotential (U_{M}) eines Wagens (2, 3) gebildet wird.

## Claims

1. Damping device (8) for at least one screened electrical cable (1, 12, 13) which has at least one parallel circuit (8) comprising at least one inductance (81) and at least one resistance (82) as well as at least one capacitance (83), wherein the parallel circuit (8) is arranged between a screen potential (U_{S}) in the electrical cable (1, 13) and a reference potential (U_{M}) which is different therefrom.

2. Damping device according to Claim 1, wherein the resistance (82) is in the form of a separate component.

3. Damping device according to Claim 1, wherein the resistance (82) is formed by the winding resistance of the inductance (81) of the parallel circuit (8).

4. Damping device according to Claim 1, wherein the capacitance (83) is formed by the parasitic capacitance which is formed between the screen potential (U_{S}) in the electrical cable (1) and the reference potential (U_{M}).

5. Damping device according to Claim 1, wherein the screen potential (U_{S}) is formed by the line screen (13) of at least one electrical cable (1).

6. Damping device according to Claim 1, wherein the reference potential is formed by the earth potential.

7. Damping device according to Claim 1, wherein the reference potential is formed by the ground potential.

8. Damping device according to Claim 1, wherein the reference potential for rail vehicles is formed by the ground potential (U_{M}) of a vehicle (2, 3).

## Revendications

1. Dispositif ( 8 ) atténuateur pour au moins un câble ( 1, 12, 13 ) électrique blindé, qui comprend au moins un circuit ( 8 ) parallèle composé d'au moins une inductance ( 81 ) et d'au moins une résistance ( 82 ) ainsi que d'au moins une capacité ( 83 ), le circuit ( 8 ) parallèle étant monté entre un potentiel ( US ) de blindage du câble ( 1, 13 ) électrique et un potentiel ( UM ) de référence qui en diffère.

2. Dispositif atténuateur suivant la revendication 1, dans lequel la résistance ( 82 ) est constitué sous la forme d'un composant distinct.

3. Dispositif atténuateur suivant la revendication 1, dans lequel la résistance ( 82 ) est formé par la résistance d'enroulement de l'inductance ( 81 ) du circuit ( 8 ).

4. Dispositif atténuateur suivant la revendication 1, dans lequel la capacité ( 83 ), est formée par la capacité parasite qui se forme entre le potentiel ( US ) de blindage du câble ( 1 ) électrique et le potentiel ( UM ) de référence.

5. Dispositif atténuateur suivant la revendication 1, dans lequel le potentiel ( US ) de blindage est formé par le blindage ( 13 ) de conducteur d'au moins un câble ( 1 ) électrique.

6. Dispositif atténuateur suivant la revendication 1, dans lequel le potentiel de référence est formé par le potentiel de terre.

7. Dispositif atténuateur suivant la revendication 1, dans lequel le potentiel de référence est formé par le potentiel de masse.

8. Système de communication suivant la revendication 1, dans lequel pour des véhicules ferroviaires le potentiel de référence est formé par le potentiel ( UM ) de masse d'une voiture ( 2, 3 ).
